# EUROPEAN PATENT APPLICATION

(11) **EP 4 524 392 A1**
(43) Date of publication of application: **19.03.2025**
(21) Application number: 22948944.8
(22) Date of filing: 23.09.2022
(51) Int. Cl.: F03D 7/02, F03D 9/12, F03D 1/06, F16F 15/30, F01D 5/10, F01D 5/26, B64C 27/51

(54) **GYROSCOPE ASSEMBLY, TURBINE BLADE, IMPELLER AND WIND POWER GENERATOR SET**

(30) Priority: 30.06.2022 CN 202210773042
(71) Applicant: GOLDWIND SCIENCE & TECHNOLOGY CO., LTD., Xinjiang 830026 (CN)
(72) Inventor: LI, Yan, Beijing 100176 (CN); WANG, Jingyuan, Beijing 100176 (CN); ZHANG, Zhihong, Beijing 100176 (CN); LI, Xin, Beijing 100176 (CN); XU, Zhiliang, Beijing 100176 (CN)
(74) Representative: Gulde & Partner
(86) International application number: PCT/CN2022/120934
(87) International publication number: WO 2024/000855

(57) **Abstract**

A gyroscope assembly, a wind turbine blade, an impeller, and a wind power generator set. The wind turbine blade comprises a blade body (10), a web (11), and a gyroscope assembly, the blade body (10) has an inner cavity; the web (11) is fixedly disposed in the inner cavity; the gyroscope assembly is arranged on the web (11), the gyroscope assembly comprises at least one gyroscope, and the gyroscope assembly is configured to adjust the stability of the wind turbine blade by means of the rotation of the gyroscope.

## Description

### TECHNICAL FIELD

The present disclosure belongs to the technical field of wind power generation, and in particular relates to a gyroscope assembly, a wind turbine blade, an impeller and a wind power generator set.

### BACKGROUND ART

In the field of wind power technology, with the development of large-impeller high-power units, the power of the unit is proportional to the square of the impeller diameter, and the weight of the unit is proportional to the cube of the impeller diameter. Gravity loads lead to a significant increase in component design costs, including blades/pitches bearings/main bearings/gearboxes/wheel hubs and other components. The stability design of long and flexible blades has increasingly become a design bottleneck. The lightweight design of the blades has caused serious losses in blade oscillation damping, the headroom challenges the safety boundary, and the flutter speed is getting closer and closer to the maximum safe operation speed.

### SUMMARY

The main purpose of the present disclosure is to provide a gyroscope assembly, a wind turbine blade, an impeller and a wind power generator set to improve the stability of the wind turbine blade.

For the above purposes, the present disclosure provides the following technical solutions:

In one aspect of the present disclosure, a wind turbine blade is provided. The wind turbine blade includes a blade body, a web and a gyroscope assembly. The blade body has an inner cavity; the web is fixedly arranged in the inner cavity; and the gyroscope assembly is arranged on the web, the gyroscope assembly includes at least one gyroscope, wherein the gyroscope assembly is configured to adjust the stability of the wind turbine blade through rotation of the gyroscope.

In another aspect of the present disclosure, an impeller is provided, which includes a wheel hub and at least two wind turbine blades arranged on the outer periphery of the wheel hub, and the wind turbine blades are the wind turbine blades as described above.

In another aspect of the present disclosure, a wind power generator set is provided. The wind power generator set includes a vibration sensor, a control device and an impeller as described above. The vibration sensor is used to monitor the vibration of the wind turbine blade. The control device uses to receive the monitoring data of the vibration sensor and to control the operating state of the gyroscope assembly according to the monitoring data.

Another aspect of the present disclosure provides a gyroscope assembly suitable for blades of wind power generator set. The gyroscope assembly is used to be connected to the web of the wind turbine blade. The gyroscope assembly includes a gyroscope, wherein the gyroscope assembly is configured to adjust the stability of the wind turbine blade through the rotation of the gyroscope.

The gyroscope assembly, wind turbine blade, impeller and wind turbine generator set provided by the present disclosure have at least the following beneficial effects: the gyroscope assembly provided by the present disclosure can be installed on the wind turbine blade to adjust the stability of the wind turbine blade through the rotation of the gyroscope.

### BRIEF DESCRIPTION OF THE DRAWINGS

The above and/or other objects and advantages of the present disclosure will become clearer through the following description of the embodiments in conjunction with the accompanying drawings, in which:
Figure 1 is a partial structural view of a wind turbine blade provided by a first exemplary embodiment of the present disclosure.
Figure 2 is a partial structural view of a wind turbine blade provided by a second exemplary embodiment of the present disclosure.
Figure 3 is a partial structural view of a wind turbine blade provided by a third exemplary embodiment of the present disclosure.
Figure 4 is a partial structural view of a wind turbine blade provided by a fourth exemplary embodiment of the present disclosure.
Figure 5 is a partial structural view of a wind turbine blade provided by a fifth exemplary embodiment of the present disclosure.
Figure 6 is a partial structural view of a wind turbine blade provided by a sixth exemplary embodiment of the present disclosure.
Figure 7 is a partial structural view of a wind turbine blade provided by a seventh exemplary embodiment of the present disclosure.

### Explanation of reference symbols:

10. Blade body; 11. Web;
12. Web support; 13. Gyroscope base;
14. The first gyroscope; 15. The second gyroscope;
16. The third gyroscope; 17. The first rotation axis;
18. Driving element; 19. Gyroscope base support;
20. Connector.

### DETAILED DESCRIPTION OF EXEMPLARY EMBODIMENTS

Example embodiments will now be described more fully with reference to the accompanying drawings. However, it shall not be understood that the mode of implementation of this disclosure is limited to the mode of implementation set forth herein. The same reference numerals in the drawings represent the same or similar structures, and thus their detailed descriptions will be omitted.

An exemplary embodiment of the present disclosure provides a wind power generator set. The wind power generator set includes a tower, an impeller and a generator supported on the top of the tower. The impeller is connected to the input shaft of the generator to drive the generator to generate electricity through the rotation of the impeller. The impeller includes a wheel hub and at least two wind turbine blades connected to the wheel hub. During the operation of the wind power generator set, the wind turbine blades may vibrate. The gyroscope assembly provided by the present disclosure can be applied to the wind turbine blades to improve the stability of the wind turbine blades.

Specifically, the gyroscope assembly provided by the present disclosure includes at least one gyroscope. The gyroscope assembly is configured to be installed on the web 11 of the wind turbine blade. The at least one gyroscope can rotate around its own rotation axis to adjust the stability of the wind turbine blade. The setting angle of the rotation axis of the gyroscope can be selected according to actual needs.

In one or more embodiments, the gyroscope provided by the present disclosure includes a mass block. Driven by a driving element, the mass block can rotate around the rotation axis. The shape of the mass block can be selected according to actual conditions. For example, but not limited to, the mass block is cylindrical.

In one or more embodiments, the gyroscope provided by the present disclosure refers to a rigid body that rotates around a fulcrum at high speed. The gyroscope has fixed axis property and precession property and is widely used in various industries. The web of the wind turbine blade provided by the present disclosure is one of the main components of the main beam of the wind turbine blade. When the wind turbine blade is subjected to the load in the waving direction, the web will bear a large compressive load, which directly affects the safety performance of the wind turbine blade. According to different structural design, the types of webs include single webs, double webs and small webs.

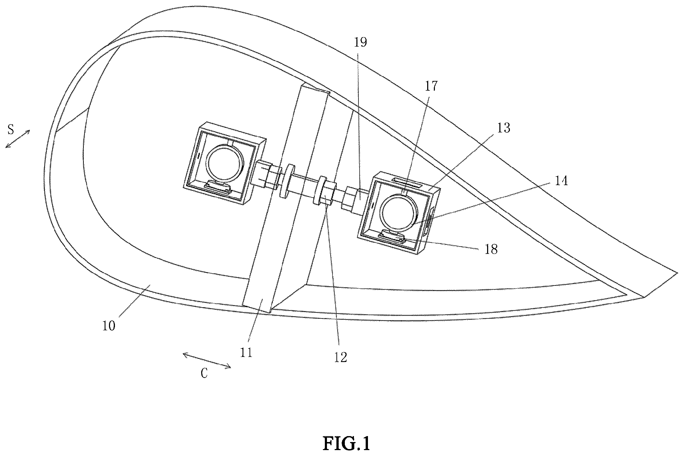

Referring to figure 1, a wind turbine blade may include a blade body 10 and a web 11. The web 11 extends from the blade root end to the blade tip along the blade span direction S of the wind turbine blade. The blade span direction S and chord direction C of the wind turbine blade are respectively as shown in the figure. For convenience of description, in this embodiment, the rotation axis of the gyroscope is perpendicular to both the blade span direction S and the chord direction C as an example.

In order to convenient the installation of the gyroscope, the gyroscope assembly further includes a gyroscope base 13. Each gyroscope base 13 is provided with at least one gyroscope, and each gyroscope can rotate around its own rotation axis.

In this embodiment, the description is given by taking the gyroscope base 13 provided with a gyroscope as an example. In this embodiment, the gyroscope base 13 may has a hexahedral casing structure, and the gyroscopes are arranged on a pair of opposite side walls of the gyroscope base 13 as needed.

Continuing to refer to FIG. 1, specifically, the gyroscope base 13 includes opposite first side wall and second side wall, and the gyroscope may be a first gyroscope 14, which is driven by a driving element 18 to be able to rotate around the rotation axis. The driving element 18 may be connected to the first side wall. For example, but not limited to, the driving element 18 may be a servo motor, and the servo motor may be configured to have its output shaft perpendicular to the first side wall, but is not limited to this. The output shaft of the driving element 18 can be fixed on the first end of a first rotation axis 17, and the second end of the first rotation axis 17 is rotationally connected to the second side wall. That is, in this embodiment, the first rotation axis 17 is rotationally disposed between the opposite first side wall and the second side wall, and the first rotation axis 17 is perpendicular to both the first side wall and the second side wall, but is not limited to this. The first rotation axis 17 is adapted to rotate around the first rotation axis, so that the first gyroscope 14 can rotate around the first rotation axis. In this embodiment, the first rotation axis is substantially perpendicular to the blade span direction S and the chord direction C at the same time, as shown in Figure 1, but is not limited to this.

It can be understood that, as needed, the first rotation axis 17 can be arranged on the other two sets of opposite side walls of the gyroscope base 13, so that the first rotation axis is substantially parallel to the blade span direction S or the chord direction C, but is not limited to this.

Specifically, there is a first angle between the first rotation axis and the blade span direction S, a second angle between the first rotation axis and the chord direction C, and a third angle between the first rotation axis and the thickness direction, where the thickness direction is perpendicular to both the blade span direction S and the chord direction C. As an example, the first angle may satisfies 0°≤first angle≤90°. In the same way, the range of the second angle and the third angle satisfies 0° ≤ second angle ≤ 90°, and 0° ≤ third angle ≤ 90°.

Continuing to refer to Figure 1, in order to be able to be connected to the web 11, the gyroscope assembly may further include a support. Specifically, the support may include a web support 12 fixed on the web 11 and a gyroscope base support 19 fixed on the gyroscope base 13. The web support 12 and the gyroscope base support 19 are matched with each other, for example but not limited to, the web support 12 and the gyroscope base support 19 are arranged in pairs and are connected by thread. By connecting the gyroscope base support 19 to the web support 12, the gyroscope base 13 can be connected to the web 11. As an example, the gyroscope base support 19 and the web support 12 can be threaded connection to form a detachable connection, which facilitates the detachment and inspection of the gyroscope assembly, but is not limited to this. Wherein, there is no restriction on the fixing form of the support and the web, including but not limited to fastening, bonding, magnetic attraction, mechanical engagement, deformation engagement, etc. In addition, the support and the web may be integrally formed to form a connection part.

Further, in this embodiment, a web 11 is provided in the wind turbine blade, and the gyroscope assembly may include a pair of gyroscopes arranged in pairs. A pair of gyroscopes may be symmetrically arranged on both sides of the web 11, that is, two gyroscopes are respectively arranged on both sides of the web 11 along the chord direction C. As an example, the two gyroscopes may be symmetrically arranged with respect to the web 11, but is not limited to this.

In this embodiment, the gyroscope assembly includes a pair of gyroscope bases 13, the pair of gyroscope bases 13 are formed into a gyroscope pair, and the pair of gyroscope bases 13 are respectively arranged on opposite sides of the web 11. In this embodiment, the two gyroscopes in the pair of gyroscope bases 13 can respectively rotate around their respective rotation axes, and the rotation axes of the two gyroscopes is approximately parallel, but is not limited to this. In addition, the rotation axes of the two gyroscopes may intersect or coincide, which are all within the scope of protection of the present disclosure.

The connection line between the two gyroscope bases 13 in a pair of gyroscope pairs and the web 11 may be arranged to have a predetermined angle. Referring to FIG.1, the connection line between the two gyroscope bases 13 in each pair of gyroscope pairs is substantially perpendicular to the web 11, but is not limited to this. It can be understood that when a pair of gyroscope pairs is arranged perpendicularly to the web 11, the line connecting the pair of gyroscope pairs is generally parallel to the chord direction C, but is not limited to this.

In addition, the angle between the connection line between the two gyroscope bases 13 in each pair of gyroscope pairs and the web 11 can be 30°, 45°, 60°, etc., which can be selected according to actual needs.

In order to improve the effectiveness of the gyroscope assembly, the gyroscope assembly can be placed close to the tip of the wind turbine blade. For example, but not limited to, the distance L1 from the gyroscope assembly to the root of the wind turbine blade satisfies 0.5L≤L1≤2/3L (which is beneficial to blade space optimization and lightning protection constraints), wherein, L is the length of the wind turbine blade in the blade span direction S. In this embodiment, the blade span direction S of the wind turbine blade can also be called the axial direction of the wind turbine blade.

The present disclosure can generate a reaction torque around another axis of the gyroscope by applying a controllable torque around the rotation axis of the gyroscope to the gyroscope, and the reaction torque will be generated on the corresponding wind turbine blade. The controllable torque is applied to at least partially resist or offset the undesired vibration torque of the wind turbine blade, that is, by arranging a gyroscope and rotating the gyroscope within the wind turbine blade, the negative torque of the wind turbine blade can be resisted or offset, thereby improving the stability of the wind turbine blade.

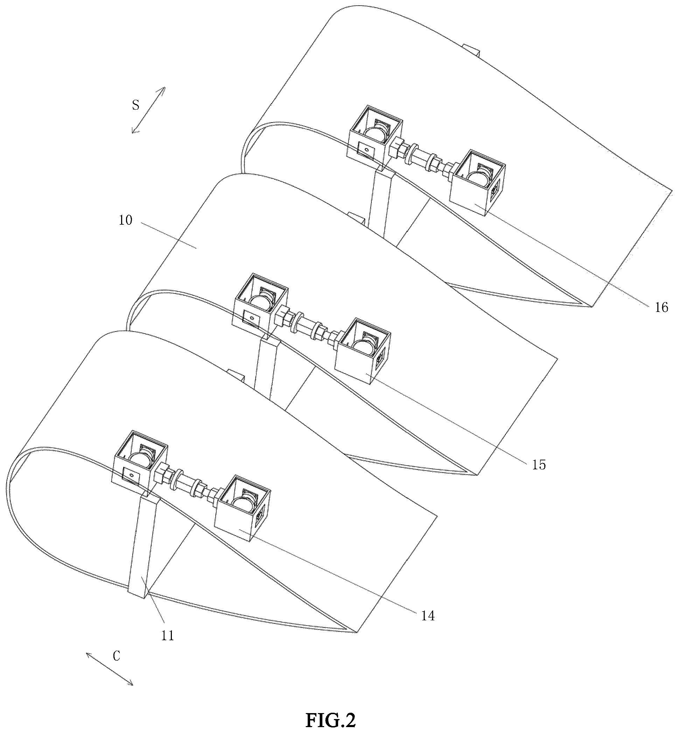

Referring to Figure 2, what is different from the embodiment in Figure 1 is that the number of gyroscopes in this embodiment is increased. In order to further improve the stability of the wind turbine blade, the gyroscope assembly may include at least one first gyroscope 14, at least one second gyroscope 15 and at least one third gyroscope 16, the first gyroscope 14 can rotate around the first rotation axis, the second gyroscope 15 can rotate around the second rotation axis, the third gyroscope 16 can rotate around the third rotation axis. The first gyroscope 14, the second gyroscope 15 and the third gyroscope 16 are arranged at intervals along the blade span direction S. In this way, when the wind turbine blade sustains vibration or other instability, the anti-vibration amount can be allocated to different gyroscopes according to the vibration situation and vibration amplitude. The coordinated cooperation among those gyroscopes enables the wind turbine blade to regain stability and improves the adaptability of the wind turbine blade to various working conditions, that is, the stability or vibration resistance of the wind turbine blade is improved.

Continuing to refer to FIG. 2, the gyroscope assembly includes at least three pairs of gyroscope pairs, the three pairs of gyroscope pairs are arranged at intervals along the blade span direction S, and the three pairs of gyroscope pairs include at least one first gyroscope 14 , at least one second gyroscope 15 and at least one third gyroscope 16. The first gyroscope 14 can rotate around the first rotation axis, the second gyroscope 15 can rotate around the second rotation axis, the third gyroscope 16 can rotate around the third rotation axis, and the first rotation axis, the second rotation axis and the third rotation axes are perpendicular to each other, but is not limited to this.

The connection line between the two gyroscope bases 13 in each pair of gyroscope pairs and the web 11 may form a predetermined angle. Referring to FIG. 2, the connection line between the two gyroscope bases 13 in each pair of gyroscope pairs is substantially perpendicular to the web 11, but is not limited to this. In addition, the angle between the connection line between the two gyroscope bases 13 in each pair of gyroscope pairs and the web 11 can be 30°, 45°, 60°, etc., which can be selected according to actual needs. In this embodiment, multiple pairs of gyroscope pairs are substantially arranged in parallel, which facilitates modular production and assembly of gyroscope assembly and facilitates the reduction of operation and maintenance costs, but is not limited to this.

According to actual needs, adjacent gyroscope pairs can be arranged at equal intervals along the blade span direction S, but is not limited to this.

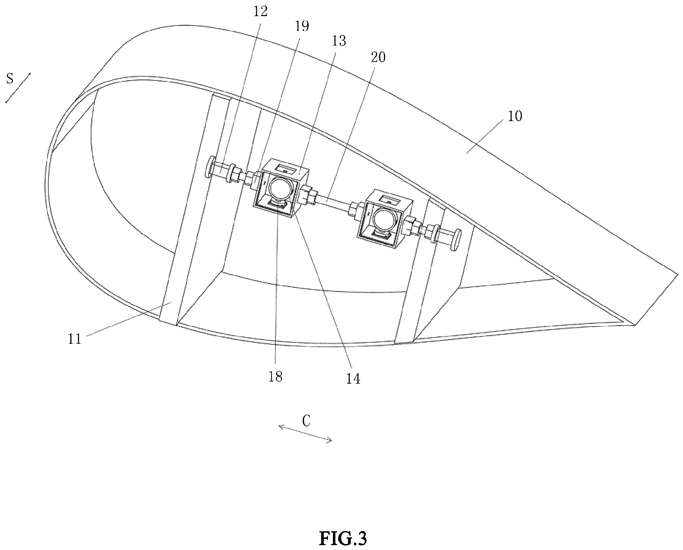

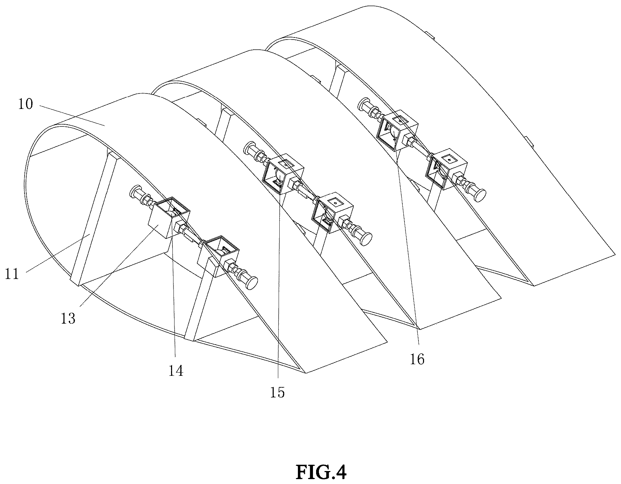

Referring to Figures 3 and 4, Figures 3 and 4 show a structural diagram of a wind turbine blade provided by another exemplary embodiment of the present disclosure. Different from the embodiment in Figure 1, the wind turbine blade in this embodiment includes at least two webs 11, a pair of gyroscope pairs is arranged between two adjacent webs 11. In this embodiment, the gyroscope pairs further includes a connector 20, and the connector 20 is connected between a pair of gyroscope pairs. By arranging the connector 20 between the two gyroscopes, the structural strength of the gyroscope assembly is further improved. Optionally, the part between the two gyroscopes can be directly formed into a connecting part in an integral form without corresponding combining elements.

In order to improve the intelligent mode of the wind turbine and reduce the cost of manual operation and maintenance, the wind turbine can further include a vibration sensor, a control device and an impeller. The vibration sensor is used to monitor the vibration of the wind turbine blades, and the control device is used to receive monitoring data from the vibration sensor and can control the operating status of the gyroscope assembly based on the monitoring data.

In one or more embodiments, gyroscopic torque is used to improve the stability of the unit, which mainly utilizes the counter-cancellation effect of the gyroscopic torque (*̅M̅g̅*̅ = *J ·* Ω̅×ω̅_̅{̅y̅}̅, wherein, J is the inertia of the gyroscopic rotor, Ω is the autobiography speed of the gyroscopic, and ω is the rotation speed of the gyroscopic) on the blade disturbance and deformation that is produced by the motion characteristics of the impeller rotation, wind turbine blade oscillation, wind turbine blade swing, wind turbine blade torsion and other modes. The gyroscopic is a single-axis rotating gyroscopic with the advantage of modular installation. According to the following control stability requirements and rotation direction, the gyroscopic is fixed on a single web or between double webs.

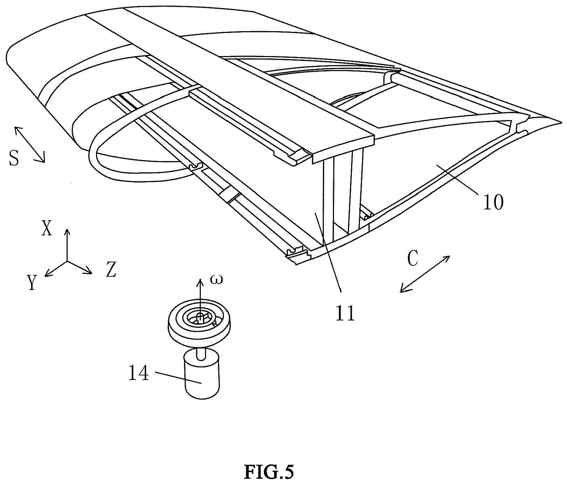

Referring to Figure 5, in this embodiment, the X direction is the downwind direction of the wind turbine blades, the Y direction indicates the forward direction of the wind turbine blades, and the Z direction indicates the bowing direction of the wind turbine blades. In addition, the blade span direction S and chord direction C of the wind turbine blade are as shown in the figure.

In this embodiment, the rotation axis of the gyroscope is perpendicular to the blade span direction S and the chord direction C at the same time, and the angular velocity ω of the gyroscope is in the direction pointed by the arrow, where the arrow is perpendicular to the blade span direction S and the chord direction C at the same time, so the swing stability of the wind turbine blades can be improved through the rotation of the gyroscope. It mainly improves the swing stability of the wind turbine blades through the following mechanisms. Improving the swing stability is further conducive to improving the oscillation stability.

Analysis of the impact of impeller rotation: the impeller rotation direction is the same as the gyroscope rotation direction. According to the gyroscope torque calculation principle, it can be concluded that the gyroscope torque does not produce additional torque on the wind turbine blades, that is, this installation way will not bring additional side effects.

Blade oscillation stability analysis: when the wind turbine blade is disturbed to accelerate forward (i.e. in the Y direction), in the same direction as the gyroscope rotation direction, according to the gyroscope torque calculation principle, it can be concluded that the gyroscope torque does not produce additional torque on the wind turbine blade, that is, there is no other Side effects. When the wind turbine blades are disturbed to accelerate backward (i.e. in the opposite direction of the Y direction), no additional torque is generated. That is, this installation method will not bring additional side effects.

Blade swing stability analysis: when the blade is disturbed and accelerates downwind ((i.e. in the X direction), according to the calculation principle of gyroscope torque, it can be concluded that the gyroscope torque drives the blade to raise its head; when the blade is disturbed and accelerates toward the wind ((i.e. in the opposite direction of the X direction), according to the calculation principle of gyroscope torque, it can be concluded that the gyroscope torque drives the blade to lower its head. That is, this installation way is beneficial to the swing stability.

Blade torsional stability analysis: when the blade is disturbed to raise its head (i.e. in the opposite direction of the Z direction), it can be concluded based on the gyroscope torque calculation principle that the gyroscope torque drives the blade to move against the wind; when the blade is lowered due to disturbance, it can be derived based on the gyroscope torque calculation principle that the gyroscopic torque drives the blades downwind. That is, this kind of installation way is detrimental to torsional stability.

Specifically, taking a 90m wind turbine blade as an example, the gyroscope is installed at a cross-sectional position 60m away from the blade root. The chord length at this cross-sectional position is about 1.6m, the absolute thickness is about 0.43m, and the designed gyroscope rotational inertia is 3.2kg·m², the rotation speed is about 5600rpm, and the size of the gyroscope base 13 is about 0.4m, which can reduce the first-order oscillation mode energy of the blade in the internal bending moment in the blade root surface by 12%.

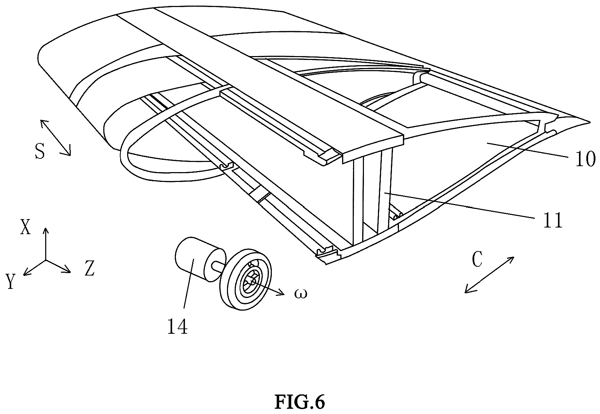

Referring to Figure 6, in this embodiment, the X direction indicates the downwind direction of the wind turbine blades, the Y direction indicates the forward direction of the wind turbine blades, and the Z direction indicates the head down direction of the wind turbine blades. In addition, the blade span direction S and chord direction C of the wind turbine blade are as shown in the figure.

In this embodiment, the rotation axis of the gyroscope is approximately parallel to the blade span direction S. In this embodiment, the angular velocity ω of the gyroscope is in the direction pointed by the arrow, where the arrow is parallel to the blade span direction S. In this way, through the gyroscope rotation can improve the oscillation stability of the wind turbine blades, which mainly improves blade headroom and oscillation stability through the following mechanisms.

Analysis of the impact of impeller rotation: according to the calculation principle of gyroscopic torque, it can be concluded that the gyroscopic torque drives the blades to move against the wind, which can improve headroom safety.

Blade oscillation stability analysis: when the blade is disturbed to accelerate forward, according to the gyroscopic torque calculation principle, it can be concluded that the gyroscopic torque drives the blade to move against the wind; when the blade is disturbed to accelerate backward, the gyroscopic torque drives the blade to move along the wind. That is to say, this kind of installation way tends to be beneficial to the oscillation stability through the adjustment of the angle of attack.

Blade swing stability analysis: when the blade is disturbed and accelerates downwind, the gyroscopic torque drives the blade to accelerate forward; when the blade is disturbed and accelerates toward the wind, the gyroscopic torque drives the blade to decelerate. That is to say, this kind of installation way is detrimental to the swing stability, but the large aerodynamic damping in the swing direction can offset this adverse effect.

Blade torsional stability analysis: when the blade is disturbed to raised its head, according to the gyroscopic torque calculation principle, it can be concluded that the gyroscopic torque has no additional torque on the blade, that is, there are no other side effects; when the blade is disturbed to lowered its head, according to the gyroscopic torque calculation principle, it can be concluded that the gyroscopic torque produces no additional torque on the blade, that is, there are no other side effects. That is, this kind of installation will not bring additional side effects.

Specifically, taking a 90m blade as an example, the gyroscopic is installed at a cross-sectional position 60m away from the blade root. The chord length at this cross-sectional position is about 1.6m, the absolute thickness is about 0.43m, and the designed gyroscopic rotational inertia is 3.2kg·m², the rotation speed is about 5600rpm, and the size of the gyroscopic base 13 is about 0.4m, which can reduce the first-order oscillation mode energy of the blade in the internal bending moment in the blade root surface by 4.4%.

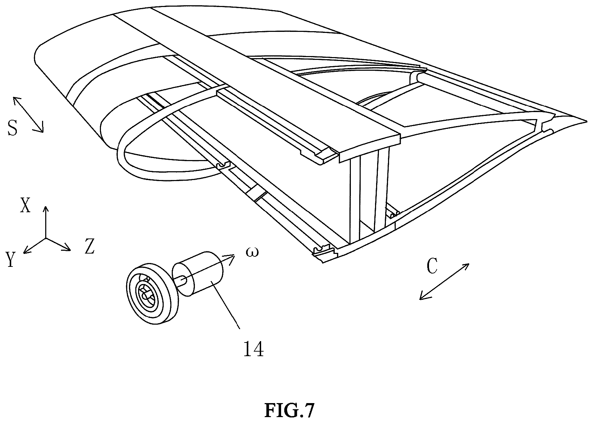

Referring to Figure 7, in this embodiment, the X direction indicates the downwind direction of the wind turbine blades, the Y direction indicates the forward direction of the wind turbine blades, and the Z direction indicates the head down direction of the wind turbine blades. In addition, the blade span direction S and chord direction C of the wind turbine blade are as shown in the figure.

In this embodiment, the rotation axis of the gyroscope is arranged parallel to the chord direction C. In this embodiment, the angular velocity ω of the gyroscope is in the direction pointed by the arrow, where the arrow is parallel to the chord direction C of the wind turbine blade. This can improve stall speed and headroom margins, which mainly improves blade headroom and stall margins through the following mechanisms:

Analysis of the influence of impeller rotation: according to the calculation principle of gyroscopic torque, it can be concluded that the gyroscopic torque drives the blade to lower its head. That is to say, this kind of installation way can improve the blade stall margin.

Blade oscillation stability analysis: when the blade is disturbed to accelerate forward, according to the gyroscopic torque calculation principle, it can be concluded that the gyroscopic torque drives the blade to lower its head; when the blade is disturbed to decelerate backward, the gyroscopic torque drives the blade to raise its head. That is to say, this kind of installation way is detrimental to the oscillation stability.

Blade swing stability analysis: when the blade is disturbed and accelerates downwind, according to the gyroscopic torque calculation principle, it can be concluded that the gyroscopic torque has no additional torque on the blade, that is, there are no other side effects; when the blade is disturbed and accelerates toward the wind, according to the gyroscopic torque calculation principle, it can be concluded that the gyroscopic torque produces no additional torque on the blades, that is, there are no other side effects. That is to say, this kind of installation way has no effect on the swing stability.

Blade torsional stability analysis: when the blade raises its head due to disturbance, the gyroscopic torque drives the blade to accelerate; when the blade lowers its head due to disturbance, the gyroscopic torque drives the blade to decelerate. That is, this installation way is beneficial to torsional stability.

Specifically, taking a 90m blade as an example, the gyroscopic is installed at a 60m cross-sectional position. The chord length at this cross-sectional position is about 1.6m, the absolute thickness is about 0.43m, and the designed gyroscopic rotational inertia is 3.2kg·m², the rotation speed is about 28500rpm, and the size of the gyroscopic base 13 is about 0.4m, which can increase the first-order oscillation mode energy of the blade in the internal bending moment in the blade root surface by 3.3%.

The gyroscope assembly adopts a modular form, and the direction of the rotation axis of the gyroscope is not affected by the external dimensions. That is, the installation direction of the gyroscope on the web 11 can be determined according to actual needs.

The gyroscope assembly also includes accessories for supporting the gyroscope. For example, but not limited to, the accessories can be installed in a modular form as a support, gyroscope base 13 or connector 20 to improve the installation efficiency of the gyroscope assembly. The gyroscope base 13 adopts a three-axis symmetrical form, such as a cube, a sphere, etc., which facilitates installation and direction adjustment. As an example, in this embodiment, the gyroscope base 13 has a hexahedral structure.

The above-mentioned accessories for supporting the gyroscope are made of materials with low temperature resistance and fatigue resistance. When the gyroscope base 13 and the web 11 are connected and fixed, the fixed points should be strengthened to make the gyroscope base 13 and the web 11 connected and fixed reliably.

In one or more embodiments, the wind turbine blade provided by the present disclosure can effectively improve the stability of the blade oscillation, swing, torsion and stall by arranging the gyroscope assembly on the web and locating the gyroscope assembly close to the blade tip. It has great economic benefits for blade lightweight design and weight reduction.

At present, the impeller diameter of the unit design is getting larger and larger, the requirements for weight reduction and cost reduction are getting higher and higher, and the design uncertainty is significantly increased. Installing gyroscopes in different directions in the blade design can solve the stall/headroom/oscillation/torsion stability in a targeted manner.

If an oscillation stability problem is to be solved, the installation in Figure 5 or Figure 6 may be choose; if a headroom problem is to be solved, the installation way in Figure 6 or Figure 7 may be choose; if a stall problem is to be solved, the installation way in Figure 7 may be choose; if there are multiple problems at the same time, multiple corresponding installation way may be choose at the same time.

For stall/ headroom problems, the gyroscope shall be controlled to be turned on when the unit is operating near the rated wind speed. To solve the problem of oscillation/torsion stability, the gyroscope shall be controlled to be turned on only when the unit is operating at a pitch angle of more than three degrees. The gyroscope can be turned off in other operating ranges of the unit to avoid the long-term operation reliability of the gyroscope is reduced.

In the description of the present disclosure, it should be understood that the orientations or positional relationships indicated by the terms "center", "upper", "lower", "front", "back", "left", "right", "vertical", "horizontal", "top", "bottom", "inner", "outer", etc. are based on the orientations or positional relationships shown in the drawings, and are only for convenience of describing the present disclosure and simplifying the description, rather than indicating or implying the devices or elements referred to must have a specific orientation, or must be constructed and operate in a specific orientation and therefore are not to be construed as limitations on the disclosure.

The terms "first" and "second" are used for descriptive purposes only and cannot be understood as indicating or implying relative importance or implicitly indicating the quantity of indicated technical features. Therefore, features defined as "first" and "second" may explicitly or implicitly include one or more these features. In the description of the present disclosure, "plurality" means two or more unless otherwise specified.

In the description of the present disclosure, it should be noted that, unless otherwise clearly stated and limited, the terms "installation", "connection", "connection" and "fixing" should be understood in a broad sense. For example, it can be a fixed connection, or a detachable connection, or an integral connection, it can be a mechanical connection, it can be an electrical connection, it can also be a communication connection; it can be a direct connection, or it can be an indirect connection through an intermediate medium, it can be an internal connection or an interaction between two components. For those of ordinary skill in the art, the specific meanings of the above terms in this disclosure can be understood on a case-by-case basis.

The features, structures, or characteristics described in this disclosure may be combined in any suitable manner in one or more embodiments. In the above description, numerous specific details are provided to provide a thorough understanding of the embodiments of the disclosure. However, those skilled in the art will appreciate that the technical solutions of the present disclosure may be practiced without one or more of the specific details recited, or that other methods, components, materials, etc. may be employed. In other instances, well-known structures, materials, or operations have not been shown or described in detail to avoid obscuring aspects of the disclosure.

## Claims

1. A wind turbine blade comprising:
a blade body (10) having an inner cavity;
a web (11) fixedly arranged in the inner cavity;
a gyroscope assembly arranged on the web (11), the gyroscope assembly includes at least one gyroscope, and the gyroscope assembly is configured to adjust the stability of the wind turbine blade by means of the rotation of the gyroscope.

2. The wind turbine blade according to claim 1, wherein
the at least one gyroscope is rotationally arranged on the web (11), wherein the at least one gyroscope can rotate around its own rotation axis, and there is a first angle between the rotation axis and the blade span direction S, a second angle between the rotation axis and the chord direction C, and a third included angle between the rotation axis and the thickness direction, wherein the thickness direction is perpendicular to both of the blade span direction S and the chord direction C.

3. The wind turbine blade according to claim 1, wherein
the gyroscope assembly further includes a gyroscope base (13), and each gyroscope is provided with one gyroscope base (13), the at least one gyroscope includes a first gyroscope (14), a second gyroscope (15) and a third gyroscope, the first gyroscope (14) is suitable for rotating around a first rotation axis, the second gyroscope (15) is suitable for rotating around a second rotation axis, and the third gyroscope (16) is suitable for rotating around a third rotation axis.

4. The wind turbine blade according to claim 3, wherein
the first gyroscope (14), the second gyroscope (15) and the third gyroscope (16) are arranged at intervals along the blade span direction S of the wind turbine blade.

5. The wind turbine blade according to claim 3, wherein the first rotation axis, the second rotation axis and the third rotation axis are perpendicular to each other.

6. The wind turbine blade according to claim 1, wherein
the gyroscope assembly further includes a gyroscope base (13), the gyroscope bases (13) are arranged in pairs, and the connection line between each pair of the gyroscope bases (13) forms a predetermined angle with the web (11).

7. The wind turbine blade according to claim 6, wherein
the connection line between each pair of the gyroscope bases (13) is perpendicular to the web (11).

8. The wind turbine blade according to claim 6, wherein
the rotation axes of the two gyroscopes in each pair of the gyroscope bases (13) are parallel, intersect or coincide.

9. The wind turbine blade according to claim 6, wherein
the wind turbine blade includes one web (11), and each pair of gyroscope bases (13) is respectively arranged on two sides of the web (11).

10. The wind turbine blade according to claim 6, wherein the wind turbine blade includes at least two webs (11), the at least two webs (11) extend along the blade span direction S of the wind turbine blade and are arranged in parallel at intervals along the chord direction C of the wind turbine blade, each pair of the gyroscope bases (13) is arranged between the at least two of the webs (11).

11. The wind turbine blade according to claim 1, wherein
the gyroscope assembly is arranged close to the blade tip of the wind turbine blade, the distance L1 between the gyroscope assembly and the blade root of the wind turbine blade satisfies 0.5L≤L1≤2/3L, and L is the length of the blade span direction S of the wind turbine blade.

12. An impeller comprising a hub and at least two wind turbine blades arranged on the outer periphery of the hub, the wind turbine blades are the wind turbine blades according to any one of claims 1-11.

13. A wind power generator set comprising a vibration sensor, a control device and an impeller as claimed in claim 12, the vibration sensor is used to monitor the vibration of the wind turbine blade, the control device is used to receive the monitoring data of the vibration sensor and controls the operating status of the gyroscope assembly based on the monitoring data.

14. A gyroscope assembly suitable for blades of wind power generator set, the gyroscope assembly is used to be connected to the web (11) of the wind turbine blade, the gyroscope assembly includes a gyroscope, wherein the gyroscope assembly is configured to adjust stability of the wind turbine blades through the rotation of the gyroscope.

15. The gyroscope assembly of claim 14, wherein the gyroscope assembly further includes a gyroscope base (13), the gyroscope is rotationally arranged on the gyroscope base (13) around the rotation axis, and the gyroscope assembly also includes a driving element, the driving element is suitable for driving the gyroscope base (13) rotation.

16. The gyroscope assembly of claim 15, wherein the gyroscope assembly further includes a support, and the gyroscope base (13) is adapted to be connected to the web (11) through the support.

17. The gyroscope assembly of claim 16, wherein
the gyroscope assembly includes a pair of gyroscope bases (13) arranged in pairs, and a pair of gyroscope bases (13) is suitable for being arranged on opposite sides of the web (11), wherein a pair of said supports is suitable for being oppositely arranged on opposite sides of the web (11).

18. The gyroscope assembly of claim 16, wherein
the gyroscope assembly includes a pair of the gyroscope bases (13) arranged in pairs, and a pair of the supports is adapted to be arranged on facing two sides of a pair of webs (11), so that a pair of the gyroscope bases (13) is arranged between a pair of adjacent webs, and a pair of the gyroscope bases (13) is connected through a connecting piece.

19. The gyroscope assembly of claim 16, wherein
the gyroscope assembly includes at least three gyroscopes that are suitable for being arranged at intervals along the blade span direction S of the wind turbine blade, wherein the at least three gyroscopes include at least one first gyroscope (14), at least one second gyroscope ( 15) and at least one third gyroscope (16), the first gyroscope (14) is suitable for rotating around a first rotation axis, the second gyroscope (15) is suitable for rotating around a second rotation axis, the third gyroscope is suitable for rotating around the third rotation axis.
